# EUROPEAN PATENT APPLICATION

(11) **EP 4 797 430 A1**
(43) Date of publication of application: **26.08.2026**
(21) Application number: 25869626.9
(22) Date of filing: 18.12.2025
(51) Int. Cl.: H01M 50/578

(54) **COVER PLATE ASSEMBLY, BATTERY AND ELECTRIC DEVICE**

(30) Priority: 31.12.2024 CN 202423323161 U; 31.12.2024 CN 202411998226
(71) Applicant: HUIZHOU EVE POWER CO., LTD., Huizhou, Guangdong 516039 (CN); Eve Power Co., Ltd., Jingmen, Hubei 448000 (CN)
(72) Inventor: LIU, Rongwei, Huizhou, Guangdong 516039 (CN); LI, Renbing, Huizhou, Guangdong 516039 (CN); YAN, Bo, Huizhou, Guangdong 516039 (CN); HE, Wei, Huizhou, Guangdong 516039 (CN)
(74) Representative: Zhu, Puxing
(86) International application number: PCT/CN2025/143680
(87) International publication number: WO 2026/145048

(57) **Abstract**

The present application provides a cover-plate assembly, a battery, and an electrical device. The cover-plate assembly includes a terminal and a body, the body includes a first connecting portion and a second connecting portion, the first connecting portion is connected to the terminal, the second connecting portion is connected to a side of the first connecting portion away from the terminal, and a junction between the first connecting portion and the second connecting portion is formed with an explosion-proof structure.

## Description

The present application claims a priority to Chinese Patent Application No. 202423323161.2, filed with the China National Intellectual Property Administration (CNIPA) on December 31, 2024, and
a priority to Chinese Patent Application No. 202411998226.5, filed with the China National Intellectual Property Administration (CNIPA) on December 31, 2024, entire contents of both of which are incorporated herein by reference.

### TECHNICAL FIELD

The present application relates to the technical field of batteries, for example, to a cover-plate assembly, a battery, and an electrical device.

### BACKGROUND

Batteries are widely used in various fields, such as energy storage systems, vehicles, consumer electronics, and the like. Thermal Runaway of the batteries refers to a phenomenon that a chemical reaction is accelerated due to an increased internal temperature during operation of the battery, resulting in a further increase in temperature, thereby forming a self-enhanced feedback cycle, and eventually leading to overheating, smoking, burning, or even explosion of the battery.

### SUMMARY

In the related art, the battery is still discharged when thermal runaway occurs in the battery, thereby easily leading to aggravating thermal runaway. Therefore, safety of the battery still needs to be improved.

In a first aspect, the present application provides a cover-plate assembly, comprising:
a terminal;
a body including a first connecting portion and a second connecting portion, wherein the first connecting portion is connected to the terminal, and the second connecting portion is connected to a side of the first connecting portion away from the terminal;
a junction between the first connecting portion and the second connecting portion is formed with an explosion-proof structure.

In a second aspect, the present application provides a battery, including a housing, a jelly roll, and a cover-plate assembly, wherein the housing is formed with a mounting cavity, the jelly roll is mounted in the mounting cavity, and the cover-plate assembly is connected to the housing..

In a third aspect, the present application provides an electrical device, including the battery.

### BENEFICIAL EFFECT

In the cover-plate assembly provided by the present application, the explosion-proof structure is disposed at a junction between the first connecting portion and the second connecting portion, and when thermal runaway occurs in the battery, the explosion-proof structure is broken, so that the first connecting portion can be separated from the second connecting portion under an action of gas or pressure generated by thermal runaway of the battery. Since the first connecting portion is connected to the terminal, so that the terminal can be separated from the second connecting portion together with the first connecting portion, thereby enabling the terminal to be separated from a collecting disk of the battery, enabling the battery to be powered off, so as to avoid a situation that the battery is still discharged when thermal runaway occurs in the battery, which easily leads to aggravating thermal runaway and to improve the safety of the battery.

### BRIEF DESCRIPTION OF THE DRAWINGS

FIG. 1 is one of structural schematic diagrams of a cover-plate assembly provided by a specific embodiment of the present application;
FIG. 2 is a cross-sectional view of a cover-plate assembly provided by a specific embodiment of the present application;
FIG. 3 is a cross-sectional view of a cover-plate assembly without a second cover plate provided by a specific embodiment of the present application;
FIG. 4 is a partially structural schematic diagram of a body provided by a specific embodiment of the present application;
FIG. 5 is another one of structural schematic diagram of a cover-plate assembly provided by a specific embodiment of the present application;
FIG. 6 is a schematic diagram of a battery provided by a specific embodiment of the present application.

### DETAILED DESCRIPTION OF THE EMBODIMENTS

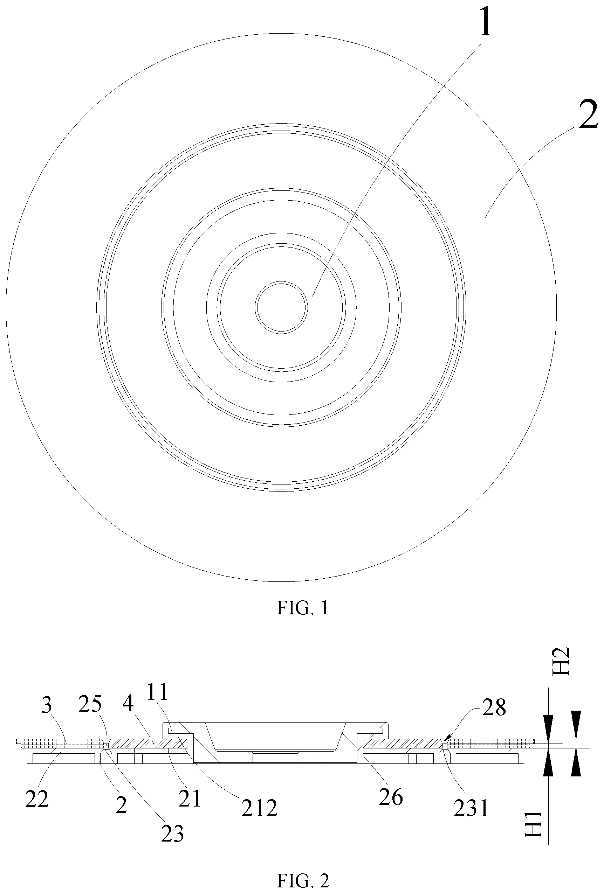

According to an embodiment of the first aspect of the present application, referring to FIG. 1 and FIG. 2, the cover-plate assembly includes a terminal 1 and a body 2, the body 2 includes a first connecting part 21 and a second connecting part 22, the first connecting part 21 is connected to the terminal 1, the second connecting part 22 is connected to a side of the first connecting part 21 away from the terminal 1, and a junction between the first connecting part 21 and the second connecting part 22 is formed with an explosion-proof structure 23.

According to the cover-plate assembly in this embodiment of the present application, the explosion-proof structure 23 is disposed at a junction of the first connecting portion 21 and the second connecting portion 22, and when thermal runaway occurs in the battery, the explosion-proof structure 23 is broken, so that the first connecting portion 21 can be separated from the second connecting portion 22 under the action of gas or pressure generated by thermal runaway of the battery. Since the first connecting portion 21 is connected to the terminal 1, the terminal 1can be separated from the second connecting portion 22 together with the first connecting portion 21, thereby enabling the terminal 1 to be separated from the collecting disk of the battery, enabling the battery to be powered off, so as to avoid a situation that the battery is still discharged when thermal runaway occurs in the battery, which easily leads to aggravating thermal runaway, and to improve the safety of the battery.

In some examples, the body 2 may be a structural member, and the structural member is divided by the explosion-proof structure 23 into a first connecting portion 21 and a second connecting portion 22.

In some examples, the first connecting portion 21 may be a structural member, and the second connecting portion 22 may be a structural member. The first connecting portion 21 may also be formed by connecting two or more structural members, and the second connecting portion 22 may also be formed by connecting two or more structural members.

In some examples, the second connecting portion 22 may be directly connected to the housing 5 of the battery, that is, the body 2 may be directly used as a cover plate. The second connecting portion 22 may also be connected to the housing 5 of the battery via other structural members. That is, the body 2 is not directly used as a cover plate, for example, the body 2 is an insulating member 26, the insulating member 26 is connected to the cover plate, and the cover plate is connected to the housing 5 of the battery.

In some embodiments, referring to FIG. 2, FIG. 3, and FIG. 4, the first connecting portion 21 is formed with a first snap groove 211, and the terminal 1 is engaged with the first snap groove 211.

It can be understood that the first connecting portion 21 is engaged with the terminal 1, so as to improve connection stability of the first connecting portion 21 and the terminal 1, and ensure the terminal 1 to be separated from the second connecting portion 22 together with the first connecting portion 21 when thermal runaway occurs in the battery, enable the terminal 1 to be separated from the collecting disk of the battery, ensure the battery to be powered off when thermal runaway occurs in the battery, and improve the safety of the battery.

In some examples, a side of the first connecting portion 21 facing an inner bottom wall of the housing 5 of the battery is formed with a support portion, and the terminal 1 is connected to a side of the support portion away from the inner bottom wall of the housing 5. Further, when thermal runaway occurs in the battery, the explosion-proof structure 23 is broken, the first connecting portion 21 and the support portion are separated, that is, the first connecting portion 21 and the support portion move in a direction away from the inner bottom wall of the housing 5. Because the terminal 1 is connected to a side of the support portion away from the inner bottom wall of the housing 5, that is, the terminal 1 is located on a movement path of the support portion, so that the support portion drives the terminal 1 to move together, so that the terminal 1 is separated from the current collecting disk, thereby powering off a power supply to the battery.

It can be understood that an end surface of one end of the terminal 1 facing the inner bottom wall of the housing 5 includes two regional surfaces, one area surface is abutted against the support portion, and the other regional surface is electrically connected to the collecting disk of the battery.

In some embodiments, referring to FIG. 2, FIG. 3, and FIG. 4, the cover-plate assembly further includes a first cover plate 3, the first cover plate 3 is mounted to the second connecting portion 22, and the first cover plate 3 is configured to be connected to the housing 5 of the battery.

It can be understood that the first cover plate 3 is mounted at the second connecting portion 22, and the first cover plate 3 can protect the second connecting portion 22.

The first cover plate 3 is connected to the housing 5 of the battery, so that the cover-plate assembly is connected to the housing 5 of the battery. At the same time, the first cover plate 3 is mounted on the second connecting portion 22, and the first cover plate 3 does not affect a separation of the first connecting portion 21, ensuring that the first connecting portion 21 and the terminal 1 can be separated from the second connecting portion 22.

In some examples, the first cover plate 3 and the terminal 1 are respectively located on two sides of the explosion-proof structure 23, and the first cover plate 3 does not affect the separation of the terminal 1, thereby ensuring that when thermal runaway occurs in the battery, the terminal 1 may be separated together with the first connecting portion 21, to power off the battery.

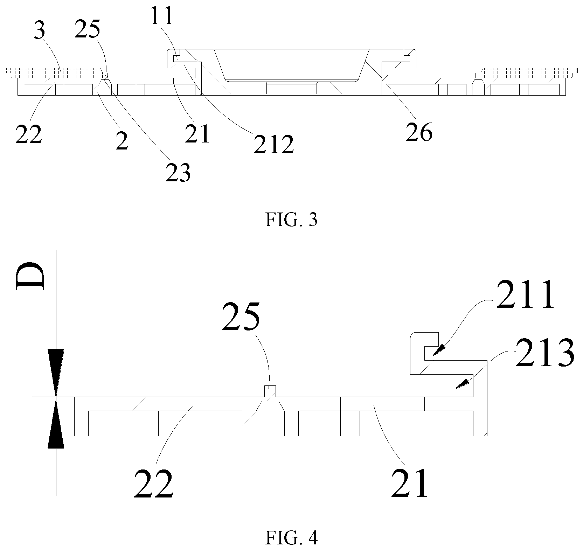

In some embodiments, referring to FIG. 2 and FIG. 3, along a radial direction of the terminal 1, a side of the first cover plate 3 away from the terminal 1 protrudes beyond the second connecting portion 22.

It may be understood that one end of the first cover plate 3 is configured to protrude beyond the second connecting portion 22, so that a protruding portion of the first cover plate 3 may be connected to the housing 5 of the battery, to facilitate connection between the first cover plate 3 and the housing 5 of the battery.

In some embodiments, referring to FIG. 2, FIG. 3, and FIG. 4, the first connecting portion 21 is formed with a lap portion 212, the terminal 1 is formed with an extension portion 11, and the extension portion 11 is at least partially overlapped on a side of the lap portion 212 away from an inner bottom wall of the housing 5.

It may be understood that the extension portion 11 of the terminal 1 is overlapped on a side of the lap portion 212 away from the inner bottom wall of the housing 5, and the lap portion 212 of the first connecting portion 21 may support the terminal 1.

It can be understood that when thermal runaway occurs in the battery, the gas or pressure in the housing 5 of the battery acts on the explosion-proof structure 23, so that the explosion-proof structure 23 is broken, and then the first connecting portion 21 can be separated from the second connecting portion 22. When the first connecting portion 21 is separated from the second connecting portion 22, the lap portion 212 of the first connecting portion 21 may drive the terminal 1 to move together in a direction away from the housing 5, so that the terminal 1 may be separated together with the first connecting portion 21, to power off the battery and improve the safety of the battery.

In some embodiments, referring to FIG. 2, FIG. 3, and FIG. 4, the cover-plate assembly further includes a second cover plate 4, and the second cover plate 4 is mounted to the first connecting portion 21.

It can be understood that the second cover plate 4 can protect the first connecting portion 21. At the same time, the second cover plate 4 is mounted on the first connecting portion 21, the second cover plate 4 is spaced apart from the first cover plate 3. When thermal runaway occurs in the battery, the second cover plate 4 can be separated from the second connecting portion 22 together with the first connecting portion 21, and the second cover plate 4 does not affect the separation of the first connecting portion 21 and the terminal 1.

In some embodiments, referring to FIG. 2, FIG. 3, and FIG. 4, the first connecting portion 21 is formed with a second snap groove 213, and the second cover plate 4 is engaged with the second snap groove 213.

It can be understood that the first connecting portion 21 is engaged with the second cover plate 4, thereby improving the connection stability of the first connecting portion 21 and the second cover plate 4, ensuring the second cover plate 4 to be separated together with the first connecting portion 21, and preventing the second cover plate 4 from affecting pressure relief of the battery.

It can be understood that the first connecting portion 21 is engaged with the second cover plate 4, thereby improving convenience of the connection between the first connecting portion 21 and the second cover plate 4, ensuring the first connecting portion 21 to be separated from the battery together with the second cover plate 4 when thermal runaway occurs in the battery, preventing the second cover plate 4 from falling into the housing 5 of the battery, and preventing the second cover plate 4 from affecting the pressure relief of the battery.

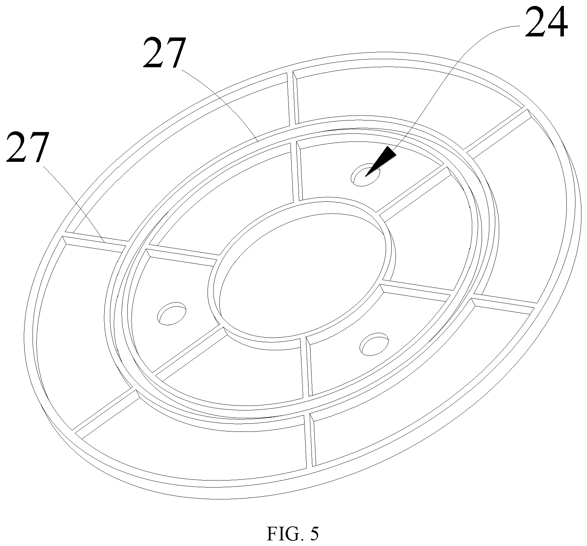

In some embodiments, referring to FIG. 5, the body 2 is formed with a positioning hole 24, and along an axial direction of the terminal 1, an orthographic projection of the second cover plate 4 on the body 2 is at least partially overlapped with the positioning hole 24

It may be understood that, because the first cover plate 3 is not directly connected to the second cover plate 4, when the second cover plate 4 is mounted, an external force may be applied to the second cover plate 4 through the positioning hole 24, so that the second cover plate 4 remains fixed, positioning of the second cover plate 4 can be implemented, and the second cover plate 4 can be secured in a corresponding position, thereby be conducive to ensuring structure consistency of the cover-plate assembly.

In some embodiments, the terminal 1 is a first electrode of the battery, the first cover plate 3 is a second electrode of the battery, and the second cover plate 4 is made of an insulating material.

It can be understood that the second cover plate 4 is disposed between the terminal 1 and the first cover plate 3, the terminal 1 and the first cover plate 3 are configured to be charged, while the second cover plate 4 is free of charge, so that the insulating separation effect between the terminal 1 and the first cover plate 3 can be increased to ensure an insulation of the battery.

For example, the terminal 1 is, for example, a positive electrode of the battery and is positively charged. The first cover plate 3 is, for example, a negative electrode of the battery and is negatively charged.

In some embodiments, referring to FIG. 2, FIG. 3, and FIG. 4, the body 2 is formed with a protruding portion 25, and the protruding portion 25 is located between the first cover plate 3 and the second cover plate 4.

It can be understood that the protruding portion 25 may separate the first cover plate 3 and the second cover plate 4, so that the first cover plate 3 is spaced apart from the second cover plate 4, and the first cover plate 3 and the second cover plate 4 are not in direct contact. Further, when thermal runaway occurs in the battery, the separation of the second cover plate 4 is not interfered and affected by the first cover plate 3, thereby ensuring that the second cover plate 4 and the first connecting portion 21 can be smoothly separated.

In some examples, the protruding portion 25 is connected to the explosion-proof structure 23.

In some embodiments, referring to FIG. 2, FIG. 3, and FIG. 4, the body 2 includes an insulating member 26, the insulating member 26 has a first connecting portion 21 and a second connecting portion 22, and the insulating member 26 is sleeved on a sidewall surface of the terminal 1.

It can be understood that the insulating member 26 is sleeved on the sidewall surface of the terminal 1, so as to enable the insulating member 26 to wrap the sidewall surface of the terminal 1, and improve insulation performance of the cover-plate assembly.

In some examples, an upper end surface of the terminal 1 is flush with an upper end surface of the insulating member 26, and a lower end surface of the terminal 1 is flush with a lower end surface of the insulating member 26. In other words, the insulating member 26 may completely wrap the sidewall surface of the terminal 1, to prevent the sidewall surface of the terminal 1 from being exposed, prevent the positive and negative electrodes of the cover-plate assembly from contacting, and ensure an insulation of the cover-plate assembly and the battery; and at the same time, the upper end surface and the lower end surface of the terminal 1 are not wrapped by the insulating member 26, so that the terminal 1 is connected to the collecting disk, and the terminal 1 is electrically connected to an external device.

In some embodiments, the insulating member 26, the first cover plate 3, the second cover plate 4, and the terminal 1 are connected by injection molding.

It can be understood that, the insulating member 26, the first cover plate 3, the second cover plate 4, and the terminal 1 are connected together by injection molding, so that a strength of the terminal 1 can be increased and the terminal 1 can have better torque resistance, thereby ensuring an sealing performance of the cover-plate assembly and ensuring an insulating performance of the positive and negative electrodes of the cover-plate assembly.

It can be understood that the insulating member 26 is wrapped on the sidewall surface of the terminal 1 by injection molding, thereby improving reliability of an injection molding strength and a structure, and reduce a risk of liquid leakage.

It can be understood that the insulating member 26, the first cover plate 3, the second cover plate 4, and the terminal 1 are integrated together, so that an integration degree of the cover-plate assembly is improved, and an assembly process of the battery is reduced.

In some embodiments, referring to FIG. 2 and FIG. 4, the explosion-proof structure 23 includes a fracture zone 231 formed in the body 2, and a minimum thickness of the fracture zone 231 is D, satisfying: 0.1 mm ≤ D ≤ 0.8 mm.

It can be understood that, under an action of an internal air pressure of the battery, a minimum thickness position of the fracture zone 231 will be broken. A value of the minimum thickness of the fracture zone 231 may be selected based on an opening value of the explosion-proof structure of the cover-plate assembly. A minimum thickness value of the fracture zone 231 is positively correlated with the opening value of the explosion-proof structure, and a larger opening value of the explosion-proof structure indicates a larger minimum thickness value of the fracture zone 231; a lower opening value of the explosion-proof structure indicates a lower minimum thickness value of the fracture zone 231.

It should be noted that, when the minimum thickness of the fracture zone 231 is greater than 0.8 mm, the height of the fracture zone 231 is too large, so that the opening value of the explosion-proof structure is too high, which cannot meet use requirements. Meanwhile, when the minimum thickness of the fracture zone 231 is greater than 0.8 mm, the protruding portion 25 protrudes beyond the pressure relief port 28 after the body 2 is provided with the protruding portion 25, thereby affecting an appearance of the cover-plate assembly. When the minimum thickness of the fracture zone 231 is less than 0.1 mm, the fracture zone 231 cannot be formed by injection molding. Therefore, in the embodiment of the present application, the thickness of the minimum thickness region of the fracture zone 231 is set to be in a range of 0.1 mm to 0.8 mm, to ensure that the body 2 can be formed by an injection molding process, ensure that the explosion-proof structure has a proper opening value, and prevent the protruding portion 25 from passing through the pressure relief port 28.

For example, the minimum thickness of the fracture zone 231 is set to 0.1 mm, 0.2 mm, 0.5 mm, 0.8 mm, or any value between any two of them.

In some embodiments, along a height direction of the battery, a projection of the fracture zone 231 at least covers part of the pressure relief port 28.

It can be understood that the projection of the fracture zone 231 at least covers the pressure relief port 28, and when the body 2 is breaks from a position of the fracture zone 231, gas can overflow from the pressure relief port 28 to prevent gas from accumulating in the housing of the battery to generate safety hazards.

In some embodiments, along the height direction of the battery, the projection of the fracture zone 231 just covers the pressure relief port 28.

In some embodiments, along the height direction of the battery, the projection of the fracture zone 231 exceeds a periphery of the pressure relief port 28. For example, the pressure relief port 28 is arranged in an annular shape, and the fracture zone 231 is also arranged in an annular shape. An inner diameter of the fracture zone 231 is less than an inner diameter of the pressure relief port 28. An outer diameter of the fracture zone 231 is greater than an outer diameter of the pressure relief port 28.

In some embodiments, referring to FIG. 2 and FIG. 4, the body 2 is formed with a pressure relief port 28, the protruding portion 25 is engaged with the pressure relief port 28, the fracture zone 231 is disposed close to the pressure relief port 28, a height of the protruding portion 25 is H1, and a height of the pressure relief port 28 is H2, satisfying: H1≤ H2.

It can be understood that the height of the protruding portion 25 is less than or equal to the height of the pressure relief port 28 to prevent the protruding portion 25 from passing through the pressure relief port 28 to affect the aesthetic and pressure relief effect. If the height of the protruding portion 25 is greater than the height of the pressure relief port 28, the protruding portion 25 will be protruded over a surface of the body 2, so that the aesthetics of the cover-plate assembly is affected on the one hand, and on the other hand, after the fracture zone 231 of the lower side is broken, the protruding portion 25 may also continue to seal the pressure relief port 28, to affect the pressure relief effect.

In some embodiments, the pressure relief port 28 is provided as an arc-shaped opening. A central angle corresponding to the arc-shaped opening is β, satisfying: 180° ≤ β ≤ 360°.

It can be understood that when the central angle corresponding to the pressure relief port 28 is greater than or equal to 180°, the body can be bent in a direction away from the electrode assembly along the extension region of the pressure relief port 28, and the body can be deformed. In the embodiment of the present application, a central angle corresponding to the arc-shaped opening is preferably set to 360°, to form the pressure relief port 28 in an annular shape. When the body is subjected to an action of an internal air pressure of the battery, an area of the body located inside the arc-shaped opening can be ejected by the air pressure to separate, so as to enlarge a size of the opening of the pressure relief port 28.

In some embodiments, the pressure relief port 28 may also be provided as other shapes. For example, the pressure relief port 28 is provided as an elliptical opening, a square opening, or the like, to ensure that the pressure relief port 28 can relieve pressure, and the cover plate 10 can bend or separated along the extension region of the pressure relief port 28.

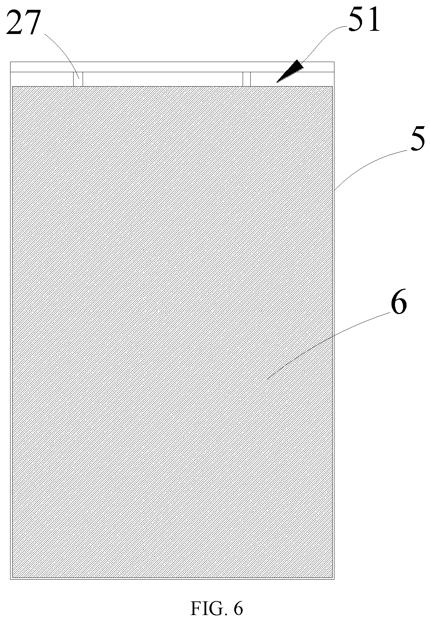

According to an embodiment of the second aspect of the present application, referring to FIG. 6, the battery includes a housing 5, a jelly roll 6, and a cover-plate assembly, the housing 5 is formed with a mounting cavity 51, the jelly roll 6 is mounted in the mounting cavity 51, and the cover-plate assembly is connected to the housing 5.

According to the battery in this embodiment of the present application, the explosion-proof structure 23 is disposed at a junction of the first connecting portion 21 and the second connecting portion 22, and when thermal runaway occurs in the battery, the explosion-proof structure 23 is broken, so that the first connecting portion 21 can be separated from the second connecting portion 22 under the action of gas or pressure generated by thermal runaway of the battery. Since the first connecting portion 21 is connected to the terminal 1, so that the terminal 1can be separated from the second connecting portion 22 together with the first connecting portion 21, thereby enabling the terminal 1 to be separated from the collecting disk of the battery, enabling the battery to be powered off, so as to a situation that the battery is still discharged when thermal runaway occurs in the battery, thereby easily leading to aggravating thermal runaway, and to improve the safety of the battery.

In some embodiments, a ratio of a cross-sectional area of the first connecting portion 21 to a cross-sectional area of the jelly roll 6 is between 0.1 and 0.5.

It can be understood that when thermal runaway occurs in the battery, the explosion-proof structure 23 at the junction between the first connecting portion 21 and the second connecting portion 22 is broken, and the first connecting portion 21 is separated, so that the gas and pressure inside the battery can be released via the mounting position of the first connecting portion 21.

The larger the cross-sectional area of the jelly roll 6, the more gas generated during thermal runaway of the battery and the greater the pressure. If the ratio of the cross-sectional area of the first connecting part 21 to the cross-sectional area of the jelly roll 6 is less than 0.1, the gas and pressure inside the battery are difficult to be quickly released when thermal runaway occurs in the battery; if the ratio of the cross-sectional area of the first connecting part 21 to the cross-sectional area of the jelly roll 6 is greater than 0.5, the cross-sectional area of the first connecting part 21 is too large, thereby easily leading to a waste of the pressure relief area. Therefore, in the present application, the ratio of the cross-sectional area of the first connecting part 21 to the cross-sectional area of the jelly roll 6 is set between 0.1 and 0.5.

In some examples, the cross-sectional area of the jelly roll 6 refers to the largest cross-sectional area of the jelly roll 6. When the jelly roll 6 is of a cylindrical structure, an area of a cross-sectional area of the jelly roll 6 refers to an area of an end surface of the jelly roll 6, and when the jelly roll 6 is of a square structure, the jelly roll 6 has a plurality of surfaces, and an area of a cross-sectional area of the jelly roll 6 refers to an area of a surface with a largest area of the jelly roll 6.

In some embodiments, referring to FIG. 2, FIG. 3, FIG. 4, FIG. 5, and FIG. 6, the body 2 is provided with a reinforcing rib 27.

It can be understood that the reinforcing rib 27 can effectively improve structural strength of the body 2 and ensure strength of the cover-plate assembly.

In some embodiments, referring to FIG. 2, FIG. 3, FIG. 4, FIG. 5, and FIG. 6, the reinforcing rib 27 protrudes beyond a side of the body 2 facing the jelly roll 6.

It may be understood that the reinforcing rib 27 is connected to a side of the body 2 facing the jelly roll 6, and the reinforcing rib 27 protrudes beyond a side of the body 2 facing the jelly roll 6, so that in addition to improving the structural strength of the cover-plate assembly, the reinforcing rib 27 may further form a air chamber space between the jelly roll 6 and a side of the body 2 facing the jelly roll 6, and the air chamber space may accommodate gas generated when the battery operates normally, to prevent an excessively large internal pressure of the battery during normal operation, and ensure normal operation of the battery.

In some embodiments, referring to FIG. 2, FIG. 3, FIG. 4, FIG. 5, and FIG. 6, the reinforcing rib 27 is abutted against the jelly roll 6.

It may be understood that, when the jelly roll 6 is mounted in the mounting cavity 51 of the housing 5, and the reinforcing rib 27 is abutted against one end of the jelly roll 6 away from the inner bottom wall of the housing 5, the reinforcing rib 27 may secure the jelly roll 6, thereby improving mounting stability of the jelly roll 6 in the mounting cavity 51.

In some embodiments, along an axial direction of the housing 5, a ratio of a height of the reinforcing rib 27 protruding beyond a side of the body 2 facing the jelly roll 6 to a height of the jelly roll 6 is less than or equal to 0.2.

It can be understood that when the ratio of the height of the reinforcing rib 27 protruding beyond the side of the body 2 facing the jelly roll 6 to the height of the jelly roll 6 is greater than 0.2, the height of the reinforcing rib 27 is too high, the reinforcing rib 27 will greatly affect a size of the battery, and in this case, the reinforcing rib 27 will cause an excessively large air chamber space between the jelly roll 6 and the side of the body 2 facing the jelly roll 6, and when thermal runaway occurs in the battery, the explosion-proof structure 23 may not be broken in time. Therefore, in the present application, the ratio of the height of the reinforcing rib 27 protruding beyond the side of the body 2 facing the jelly roll 6 to the height of the jelly roll 6 is set to be less than or equal to 0.2.

In some embodiments, the explosion-proof structure 23 is disposed adjacent to or spaced apart from the reinforcing rib 27, that is, the explosion-proof structure 23 is prevented from being disposed at the reinforcing rib 27, so that when thermal runaway occurs in the battery, the explosion-proof structure 23 is broken.

In some embodiments, the reinforcing rib 27 includes an annular reinforcing rib, and the annular reinforcing rib is disposed around the terminal 1. The annular reinforcing rib 27 can effectively strengthen the structure of the body 2.

In some examples, there are at least two annular reinforcing ribs, and the explosion-proof structure 23 is disposed between the two annular reinforcing ribs, that is, one annular reinforcing rib is disposed at the first connecting portion 21, and the other annular reinforcing rib is disposed at the second connecting portion 22, so that the annular reinforcing rib does not affect breakage of the explosion-proof structure 23, ensuring that the explosion-proof structure 23 can be normally broken when thermal runaway occurs in the battery, so that the gas and pressure inside the battery can be released.

In some examples, the reinforcing rib 27 includes an elongated reinforcing rib, and the elongated reinforcing rib is connected to the annular reinforcing rib to improve structural strengthening effect on the body 2.

In some examples, the at least two annular reinforcing ribs include a first annular reinforcing rib and a second annular reinforcing rib, a side of the first annular reinforcing rib away from the second annular reinforcing member is connected to an elongated reinforcing rib, and a side of the second annular reinforcing rib away from the first annular reinforcing rib is connected to an elongated reinforcing rib, thereby effectively reinforcing the structure of the body 2, and avoiding disposing the reinforcing rib 27 at the explosion-proof structure 23, so that the explosion-proof structure 23 and the reinforcing rib 27 are staggered, thereby preventing the reinforcing rib 27 from affecting the explosion-proof structure 23, and ensuring that the explosion-proof structure 23 can be normally broken when thermal runaway occurs in the battery, to release the gas and pressure inside the battery.

In some embodiments, the cover-plate assembly is connected to the housing 5 by welding, which ensures the sealing of the junction between the cover-plate assembly and the housing 5, and realizes sealing of the battery.

It can be understood that, in the related art, sealing is performed by means of grooving and a compression manner, the housing 5 is stretched during grooving, a wall thickness of the housing 5 at a grooving position is reduced, the strength is reduced, and a bonding force between a nickel layer and the housing 5 at the grooving position is reduced, which easily causes the nickel layer to peel off; the sealing ring is compressed between the housing 5 and the cover plate for sealing, a compression amount needs to be controlled during compression of the sealing ring, there is a risk of leakage liquid when the compression amount is insufficient, and the sealing ring gradually ages during long-term use, so that a risk of liquid leakage is greatly increased; further, during sealing, the cover plate is also pressed, and irreversible deformation occurs, that is, the cover plate must have a certain strength to seal. In the present embodiment, the grooving process is skipped for sealing, so that a strength reduction and nickel layer peeling caused by the grooving process can be avoided, and the sealing is simpler without pressing the cover-plate assembly.

According to an embodiment of the third aspect of the present application, the electrical device includes a battery.

According to the electrical device in this embodiment of this application, the explosion-proof structure 23 is disposed at a junction of the first connecting portion 21 and the second connecting portion 22, and when thermal runaway occurs in the battery, the explosion-proof structure 23 is broken, so that the first connecting portion 21 can be separated from the second connecting portion 22 under the action of gas or pressure generated by thermal runaway of the battery. Since the first connecting portion 21 is connected to the terminal 1, so that the terminal 1can be separated from the second connecting portion 22 together with the first connecting portion 21, thereby enabling the terminal 1 to be separated from the collecting disk of the battery, enabling the battery to be powered off, so as to a situation that the battery is still discharged when thermal runaway occurs in the battery, thereby easily leading to aggravating thermal runaway, and to improve the safety of the battery.

It should be noted that the electrical device may be a vehicle, an energy storage power source, a consumer electronic device, a medical device, a smart city, an aircraft, or a household appliance. It should be noted that the foregoing is merely an example for describing the electrical device, and does not specifically limit the electrical device.

## Claims

1. A cover-plate assembly, comprising:
a terminal;
a body comprising a first connecting portion and a second connecting portion, wherein the first connecting portion is connected to the terminal, and the second connecting portion is connected to a side of the first connecting portion away from the terminal; and
a junction between the first connecting portion and the second connecting portion, wherein the junction is formed with an explosion-proof structure.

2. The cover-plate assembly according to claim 1, wherein the first connecting portion is formed with a first snap groove, and the terminal is engaged with the first snap groove.

3. The cover-plate assembly according to claim 1 or 2, wherein the cover-plate assembly further comprises a first cover plate, the first cover plate is mounted to the second connecting portion, and the first cover plate is configured to be connected to a housing of a battery.

4. The cover-plate assembly according to claim 3, wherein along a radial direction of the terminal, a side of the first cover plate away from the terminal protrudes beyond the second connecting portion.

5. The cover-plate assembly according to claim 3, wherein the first connecting portion is formed with a lap portion, the terminal is formed with an extension portion, and the extension portion is at least partially overlapped on a side of the lap portion away from an inner bottom wall of the housing.

6. The cover-plate assembly according to claim 3, wherein the cover-plate assembly further comprises a second cover plate, and the second cover plate is mounted on the first connecting portion.

7. The cover-plate assembly according to claim 6, wherein the first connecting portion is formed with a second snap groove, and the second cover plate is engaged with the second snap groove.

8. The cover-plate assembly according to claim 6, wherein the body is formed with a positioning hole, and along an axial direction of the terminal, an orthographic projection of the second cover plate on the body is at least partially overlapped with the positioning hole.

9. The cover-plate assembly according to claim 6, wherein the terminal is a first electrode of the battery, the first cover plate is a second electrode of the battery, and the second cover plate is made of an insulating material.

10. The cover-plate assembly according to claim 6, wherein the body is formed with a protruding portion, and the protruding portion is located between the first cover plate and the second cover plate.

11. The cover-plate assembly according to claim 6, wherein the body comprises an insulating member, the insulating member has the first connecting portion and the second connecting portion, and the insulating member is sleeved on a sidewall surface of the terminal.

12. The cover-plate assembly according to claim 11, wherein the insulating member, the first cover plate, the second cover plate, and the terminal are connected by injection molding.

13. The cover-plate assembly according to claim 10, wherein the explosion-proof structure comprises a fracture zone formed in the body, and a minimum thickness of the fracture zone is D, satisfying: 0.1 mm ≤ D ≤ 0.8 mm.

14. The cover-plate assembly according to claim 13, wherein the body is formed with a pressure relief port, the protruding portion is engaged with the pressure relief port, the fracture zone is disposed close to the pressure relief port, a height of the protruding portion is H1, and a height of the pressure relief port is H2, satisfying: H1 ≤ H2.

15. The cover-plate assembly according to claim 14, wherein the pressure relief port is provided as an arc-shaped opening, and a central angle corresponding to the arc-shaped opening is β, satisfying: 180° ≤ β ≤ 360°.

16. A battery, comprising a housing, a jelly roll, and the cover-plate assembly according to any one of claims 1 to 15, wherein the housing is formed with a mounting cavity, the jelly roll is mounted in the mounting cavity, and the cover-plate assembly is connected to the housing.

17. The battery according to claim 16, wherein a ratio of a cross-sectional area of the first connecting portion to a cross-sectional area of the jelly roll is between 0.1 and 0.5.

18. The battery according to claim 16 or 17, wherein the body is provided with a reinforcing rib.

19. The battery according to claim 18, wherein the reinforcing rib protrudes beyond a side of the body facing the jelly roll.

20. The battery according to claim 18, wherein the reinforcing rib is abutted against the jelly roll.

21. The battery according to claim 18, wherein along an axial direction of the housing, a ratio of a height of the reinforcing rib protruding beyond a side of the body facing the jelly roll to a height of the jelly roll is less than or equal to 0.2.

22. An electrical device, comprising the battery according to any one of claims 16 to 21.
